# EUROPÄISCHE PATENTSCHRIFT

(11) **EP 0 494 600 B1**
(45) Veröffentlichungstag und Bekanntmachung des Hinweises auf die Patenterteilung: **09.08.1995**
(21) Anmeldenummer: 92100044.4
(22) Anmeldetag: 03.01.1992
(51) Int. Cl.: A21C 7/01

(54) **Verfahren und Vorrichtung zum Rundwirken von Teig**
Method and device for rolling dough into balls
Procédé et appareil pour mettre la pâte en boules

(30) Priorität: 05.01.1991 DE 4100172
(43) Veröffentlichungstag der Anmeldung: 15.07.1992
(73) Patentinhaber: A. FRITSCH GMBH & CO. KG, D-97348 Markt Einersheim (DE)
(72) Erfinder: Münzer, Oskar, Dipl.-Ing., W-8717 Mainbernheim (DE)
(74) Vertreter: Matschkur, Götz, Lindner Patent- und Rechtsanwälte

(56) Entgegenhaltungen:
- EP-A- 0 097 729
- CH-A- 479 253
- DE-A- 1 290 902
- FR-A- 1 143 776
- FR-A- 1 197 480
- FR-A- 2 342 779
- NL-A- 42 195
- US-A- 3 143 084
- US-A- 3 370 555

## Beschreibung

Die Erfindung betrifft ein Verfahren und eine Vorrichtung zum Rundwirken von Teig mit einem querschnittlich etwa V-förmigen Wirkkanal, dessen beide V-Schenkel von einem ersten und einem zweiten Wirkband in entsprechender Anordnung gebildet sind.

Bei einem bekannten Rundwirker (DE-PS 30 21 329) ist das V-förmige Profil der Wirkrinne durch eine feststehende Bodenplatte abgestumpft. Der Neigungswinkel eines der Förder- bzw. Wirkbänder gegenüber dieser Bodenplatte läßt sich im Hinblick auf die vorliegenden Teigstückgrößen allerdings nur vor dem Wirkbetrieb festlegen.

Bei weiteren bekannten Rundwirkern mit V-förmigen Wirkkanälen (deutsche Auslegeschrift 2 104 416, österreichische Patentschrift 179 753) wird vorgeschlagen, die seitlichen Wirkbänder so aneinanderzulenken, daß der Öffnungs- bzw. V-Winkel des Wirkkanals verstellbar ist. Hierzu wird bei einem entsprechenden bekannten Rundwirker (deutsche Auslegeschrift 1 215 072) offenbart, die beiden aneinanderscharnierten Wirkbänder an ihren V-Schenkelenden mittels einer Feder sowie einer parallel angeordneten, manuell betätigbaren Spindel im V-Winkel gegeneinander verstellbar auszubilden. Jedoch erfolgt nach allen drei Fundstellen die Veränderung des V-Winkels stets vor dem eigentlichen Wirkbetrieb und lediglich zur Anpassung an unterschiedlich große und beschaffene Wirklinge, beispielsweise aus Roggen- oder Weizenmehl.

Mithin wird das der Erfindung zugrundeliegende Problem aufgeworfen, einen Rundwirker mit V-ähnlichem Wirkkanal zu schaffen, dessen Querschnitt sich während des Dauerbetriebs dynamisch und mit geringem konstruktiven Aufwand verändern läßt, so daß insbesondere auf den in Bearbeitung befindlichen Teig ein gleichmäßiger Druck ausgeübt wird. Dabei soll der Rundwirker zur Bearbeitung von Roggen- und/oder reinem Weizenteig gleichermaßen geeignet sein und die Herausbildung einer Knet- bzw. Wirkhaut auf dem Teig, das Auskneten von Gärblasen und eine gleichmäßige Teigspannung in befriedigender Weise ermöglichen. Zur Lösung wird bei einem Verfahren mit den eingangs genannten Merkmalen erfindungsgemäß vorgeschlagen, die Wirk- oder Förderbänder im Bereich der Scheitellinie des Wirkkanals scharniergelenkig zu verbinden und mit einem motorisierten Stellorgan zu deren Verschwenkung gegeneinander zu versehen, das an einem oder beiden Wirk- oder Förderbändern angreift und dabei deren V-Winkel während des Wirkbetriebs ständig und/oder dynamisch ändert.

Die beiden Förderbänder, die zweckmäßig an ihren Längsrändern aneinander gelenkt bzw. aneinander scharniert sind, werden mittels des Stellorgans während des Wirkbetriebs wie die Schneiden einer Schere zueinander und voneinander dynamisch verschwenkt. Hierzu wird das Stellorgan am besten periodisch angesteuert, damit auf den gesamten geförderten Teig gleichmäßig bzw. symmetrisch Druck ausgeübt wird, so daß ein optimales Wirkergebnis erzielt wird. Um dabei gegenüber der Scharnierachse ausreichende Hebelarme und mithin Drehmomente zu erzielen, greift das Stellorgan zweckmäßig an den freien Enden der querschnittlichen V-Schenkel des Wirkkanals an.

Werden die beiden Wirk- und/oder Förderbänder zur Vergrößerung bzw. Verringerung des V-Winkels periodisch und dynamisch gegeneinander verschwenkt, ergibt sich das Problem der Stabilität: der Rundwirker bleibt nicht stabil auf seinem Fundament oder dem Boden stehen, sondern ist in Gefahr umzukippen. Dem wird mit einer Ausbildung der Erfindung begegnet, nach der eines der Förderbänder und/oder die Scharnierachse an einem Tragrahmen oder Chassis der Vorrichtung ortsfest fixiert bzw. fest verankert ist.

Wenn eines der Förderbänder am Vorrichtungschassis fixiert ist, ist eine Möglichkeit geschaffen, das Stellorgan am Vorrichtungschassis gegebenenfalls gelenkig abzustützen; dann ist es ausreichend, wenn das Stellorgan an lediglich einem querschnittlichen V-Schenkel des Wirkkanals angreift, um diesen während des Wirkbetriebs zu verengen und zu verbreitern. Sowohl einer kompakten Bauform als auch dem Schutz des Stellorgans dient es, wenn es - nach einer konstruktiven Ausgestaltung dieses Gedankens - unterhalb des Wirkkanals angeordnet ist.

Während des Auf- und Zuklappens der V-Schenkel des Wirkkanals bzw. der Wirk- und/oder Förderbänder ergibt sich beim Verkleinern des V-Winkels die Tendenz, daß der Teig zur oberen, sich verbreiternden Öffnung des Wirkkanals hin herausgequetscht wird. Dem wird mit einem Erfindungsvorschlag dahingehend begegnet, daß bei der Rundwirkvorrichtung mit den eingangs erläuterten Merkmalen der Wirkkanal im Bereich seiner freien Ränder bzw. Begrenzungen mit Teig-Führungselementen versehen ist. Diese können in vorteilhafter Weise als Knet- bzw. Wirkelemente, die zum Beispiel aus Holz hergestellt sind, ausgeführt sein und dabei derart von den freien Rändern vorspringen, daß die obere Öffnung des querschnittlichen V-förmigen Profils des Wirkkanals verengt wird. Die V-Form des Wirkkanals würde beim Kneten einen kegelförmigen Teigling erzeugen.

Jedoch ist zuweilen erforderlich, dem Teigling eine runde Form zu geben. Um insbesondere diesen Effekt unabhängig vom Teiggewicht erzielen zu können, sind nach einer besonderen Ausbildung ein oder mehrere Linearschlitten vorgesehen, die zum V-Scheitel des Wirkkanals führen und die Führungselemente verschiebbar gelagert aufnehmen. Der Linearschlitten ist so angeordnet, daß sich das darin aufgenommene Führungselement längs der Wirkfläche des V-Kanals verschieben läßt.

Im Rahmen der Erfindung stellt sich das Problem der spezifischen Realisierung des Stellorgans. In erfindungsgemäßer Lösung ist dieses mit einer Stange versehen, die an einem der beiden V-förmig angeordneten Wirk- und/oder Förderbänder angelenkt und zudem mit einer Antriebseinheit gekoppelt ist, die der Stange Hubbewegungen erteilt und am oder gegenüber dem anderen Förderband ortsfest fixiert ist. In weiterer Konkretisierung dieses Gedankens weist die Antriebseinheit eine rotierbare Scheibe auf, an welcher die Stange exzentrisch angelenkt ist. So läßt sich die Rotationsbewegung der von der Antriebseinheit gedrehten Scheiben in konstruktiv einfacher Weise in eine lineare Hubbewegung der Stell-Stange umsetzen, so daß die beiden Förderbänder bzw. V-Schenkel relativ zueinander bewegt bzw. verschwenkt werden. Die Versetzung bzw. Exzentrizität des Anlenkpunktes ist mit Vorteil auf der Scheibe gegenüber dessen Zentrum einstellbar oder verschiebbar ausgeführt. Eine konkrete Realisierung dieses Gedankens ist darin denkbar, daß die Scheibe ein radiales Langloch aufweist, in welchem die Anlenkung mittels Feststellschraube fixiert werden kann.

Mit besonderem Vorteil läßt sich die für das Förderband notwendige Antriebseinheit gleichzeitig auch für das Stellorgan verwenden; mit anderen Worten, die Antriebseinheit für das Stellorgan ist mit der für das Förderband (baulich) integriert.

Eine weitere Ausbildung der Erfindung besteht darin, daß das Chassis der Wirkvorrichtung eine oder mehrere, vorzugsweise zueinander senkrechte Linearführungen aufweist, in welchen das Stellorgan verschiebbar gelagert ist. Durch eine horizontale Linearführung läßt sich der maximale und minimale Öffnungswinkel des Wirkkanals sowie dessen Hubruhelage an jeweilige Erfordernisse anpassen; durch eine vertikale Linearführung läßt sich der Winkelhub, mit dem der Wirkkanal während des Betriebs verengt oder verbreitert wird, je nach Anforderungen vergrößern und verkleinern.

Um Möglichkeiten zu schaffen, die genannten Baukomponenten (Teig-Führungselemente, Stellorgan gegebenenfalls mit Stange, Antriebseinheit) am Wirkkanal bzw. den V-förmig angeordneten Förderbändern montieren zu können, sind in vorteilhafter Weiterbildung der Erfindung Befestigungsbleche und/oder Rahmen am und/oder um den Wirkkanal vorgesehen, die vorzugsweise nach außen gekröpft sind. Durch die Kröpfung wird vom Wirkkanal abstehende, zusätzliche Fläche zum Anbringen der Baukomponenten gewonnen.

Die Einstellbarkeit der Breite des Wirkkanals erleichtert es, wenn in anderer Weiterbildung der Erfindung die Stell-bzw. Hub-Stange am querschnittlichen V-Schenkel in einem Langloch angelenkt ist, wobei die Anlenkstelle in Längsrichtung dieses Langlochs verschieb- und feststellbar ist. Vorteilhaft kann dieses Langloch in einem der genannten Befestigungsbleche oder -rahmen ausgebildet sein.

Damit während des Wirkbetriebs der Teig nicht direkt mit der Scharnierachse in Berührung kommt und deren Funktion beeinträchtigt, ist nach einer zweckmäßigen Weiterbildung der Erfindung ein Strang, z. B. Rundstahl, vorgesehen, der im Wirkkanal über der Scharnierachse liegt.

Weitere Merkmale, Einzelheiten und Vorteile auf der Basis der Erfindung ergeben sich aus der nachfolgenden Beschreibung eines bevorzugte Ausführungsbeispiele der Erfindung sowie anhand der Zeichnung. Darin zeigen:
- Fig. 1: eine perspektivische Darstellung eines erfindungsgemäßen Rundwirkers,
- Fig. 2: eine Schnittansicht gemäß der Linie II-II in Fig. 1,
- Fig. 3: eine Fig. 2 entsprechende Schnittansicht eines weiteren Ausführungsbeispiels der Erfindung,
- Fig. 4: eine Prinzipskizze der mit den Ausführungsbeispielen nach Fig. 1 - 3 realisierten Geometrien, und
- Fig. 5 u. 6: Stirnansichten auf ein weiteres Ausführungsbeispiel der Erfindung in unterschiedlichen Stellungen.

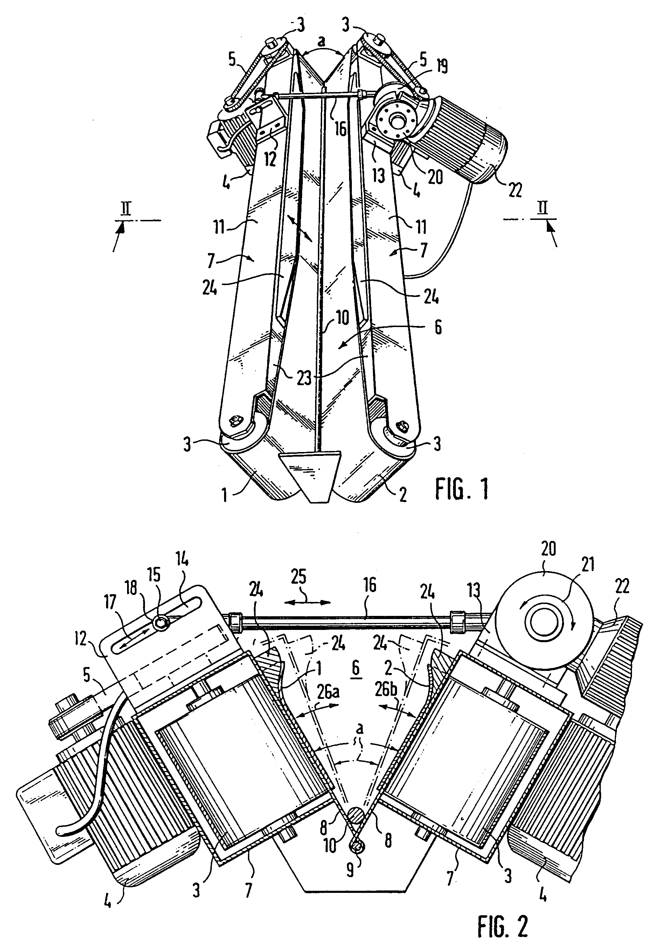

Die in Fig. 1 und 2 dargestellte Rundwirkmaschine weist ein erstes Förderband 1 und ein zweites Förderband 2 jeweils mit Umlenkrollen 3 und Förderantriebe 4 auf. Diese wirken über Keilriementriebe 5 auf je eine zugeordnete Riemenscheibe 3 zum Antrieb der entsprechenden Förderbänder 1, 2 ein. Diese sind mit ihren einander zugewandten Wirk-und Förderflächen derart angeordnet, daß sie zusammen einen im Querschnitt V-förmigen, nach oben offenen Wirkkanal 6 bilden und begrenzen, wie vor allem aus Fig. 2 ersichtlich. Dabei schließen die Förderbänder 1, 2 einen Winkel a ein und bilden gleichsam die beiden Schenkel des V-förmigen Querschnitts des Wirkkanals 6.

Jedes Förderband 1, 2 besitzt einen länglichen Befestigungsrahmen 7, in dessen Enden jeweils eine der Riemenscheiben 3 drehbar gelagert ist. An den einander benachbarten und nächstliegenden Ecken der Befestigungsrahmen 7 sind parallel zu den jeweiligen Förderbändern 1, 2 verlaufende, flächige Ansätze 8 angebracht. Sie enden jeweils in der gemeinsamen Scharnierachse 9 (senkrecht zur Zeichenebene der Fig. 2 verlaufend) der Förderbänder 1, 2. Zwischen den beiden aneinanderstoßenden Ansätzen 8 jedes Befestigungsrahmens 7 der beiden Förderbänder 1, 2 ist ein Rundstahlstrang 10 eingelegt, der parallel zur Scharnierachse 9 verläuft und diese vor Teigpartikel abdeckt. Auf den Außenflächen 11 je eines Befestigungsrahmens 7, welche sich von den freien querschnittlichen V-Schenkelenden des Wirkkanals 6 ausgehend kropfartig nach außen erstrecken, ist jeweils ein Befestigungseisen 12, 13 mit L-Profil montiert. Das eine Befestigungseisen 12 besitzt an seinem oberen Ende eine längliche Aussparung, welche ein Langloch 14 bildet. Darin ist die Anlenkstelle 15 einer Stellstange 16 in Schieberichtung 17 hin- und herbeweglich geführt. Die Anlenkstelle 15 läßt sich durch Festschrauben einer Flachscheibe 18 an die beidseitigen Begrenzungen bzw. Ränder des Langlochs 14 feststellen. Das der Anlenkstelle 15 entgegengesetzte Ende der Stellstange 16 ist an einem verdeckten Zapfen angelenkt, der auf der Breitseite einer rotierbaren Drehscheibe 19 gegenüber deren Drehachse exzentrisch angeordnet ist. Der Abstand Zapfen-Drehachse (Exzentrizität) kann einstellbar ausgeführt sein, wodurch die Knet-Elongation (Hubhöhe) an die unterschiedlichen Teigqualitäten angepaßt werden kann. Die Drehscheibe 19 ist zusammen mit einer koaxialen Zwillingsscheibe 20 auf dem einen Befestigungseisen 13 - dem anderen Befestigungseisen 12 gegenüberliegend - gelagert. Um insbesondere die Scheibe 19 in Rotation 21 zu versetzen, wirkt auf diese ein Antriebsmotor 22 ein, der auf der Außenfläche 11 und/oder dem zugeordneten Befestigungseisen 13 angebracht ist.

Die Befestigungsrahmen 7 sind am oberen Rand ihrer einander im Winkel a gegenüberliegenden Innenflächen 23 mit vorzugsweise aus Holz gebildeten Knet- bzw. Wirkschuhen 24 versehen, die von den Innenflächen 23 senkrecht vorspringen, dabei die obere Eintrittsöffnung des Wirkkanals 6 verengen und sich mit zunehmender Nähe zum V-Scheitel des Wirkkanals 6 über eine Biegung verjüngen.

Wird die Scheibe 19 vom zugeordneten Motor 22 angetrieben, wird deren Rotation 21 in eine Hubbewegung 25 der Stellstange 16 umgesetzt. Das Ausmaß dieser Hubbewegung hängt dabei von der Exzentrizität ab, mit welcher die Stellstange 16 an der Drehscheibe 19 gegenüber deren Drehachse versetzt ist. Die hin- und hergehende Hubbewegung 25 der Stellstange 16 führt zu einem Verschwenken der Förderflächen der beiden aneinander gelenkten Förderbänder 1, 2, woraus eine Vergrößerung und Verkleinerung des Winkels a zwischen beiden resultiert. Das damit einhergehende Verschwenken der beiden Förderbänder 1, 2 relativ zueinander ist in Fig. 2 gestrichelt angedeutet. Die Wirkschuhe 24 dienen dabei als Führungselemente für den im Wirkkanal 6 befindlichen Teig und verhindern, daß dieser zum nach oben offenen Ende des Wirkkanals 6 hin hinausgedrängt wird, wenn der Winkel a sich verkleinert. Zudem führen die Wirkschuhe 24 einen zusätzlichen Form- und Kneteffekt für den Teig herbei, so daß dieser gleichmäßiger und umfassender bearbeitet werden kann.

Zweckmäßig ist es, wenigstens die Scharnierachse 9 an einem Fundament, Traggestell oder Chassis (nicht gezeichnet) zu befestigen. Darüber hinaus ist es vorteilhaft, das Förderband 2, dessen Befestigungsrahmen 7 den Antriebsmotor 22 mit Antriebsscheibe 19 trägt, an einem derartigen Fundament, Rahmen oder Chassis ortsfest zu fixieren, um die Standfestigkeit der gesamten Anordnung zu sichern. Solchenfalls würden die in Fig. 2 angedeuteten Schwenkbewegungen 26b dieses ortsfesten Förderbandes 2 entfallen, während nur noch das gegenüberliegende Förderband 1 Schwenkbewegungen 26a entsprechend den Hubbewegungen 25 bzw. der Rotation 21, wie zeichnerisch gestrichelt angedeutet, ausführt.

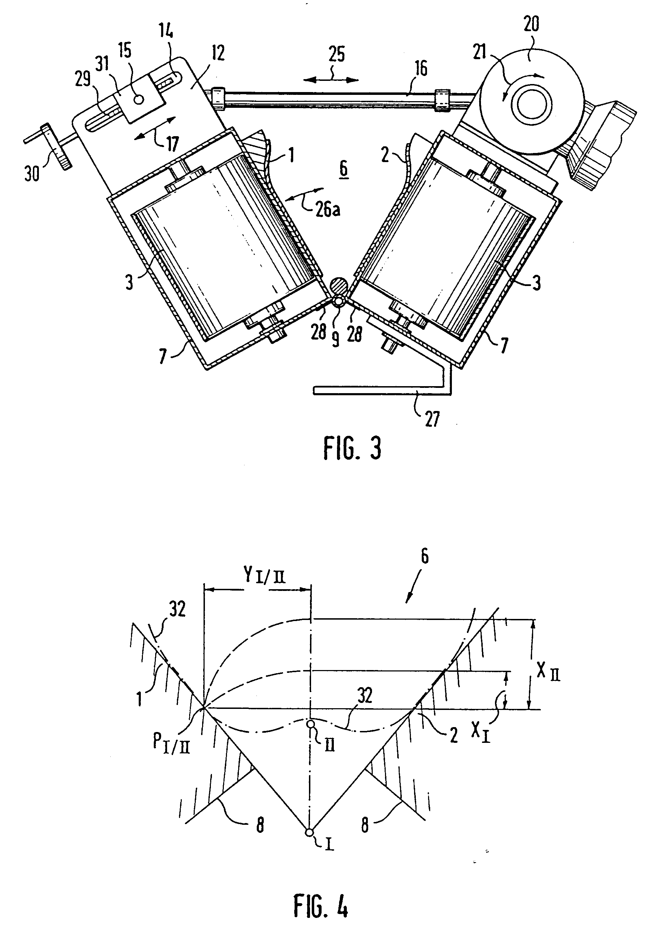

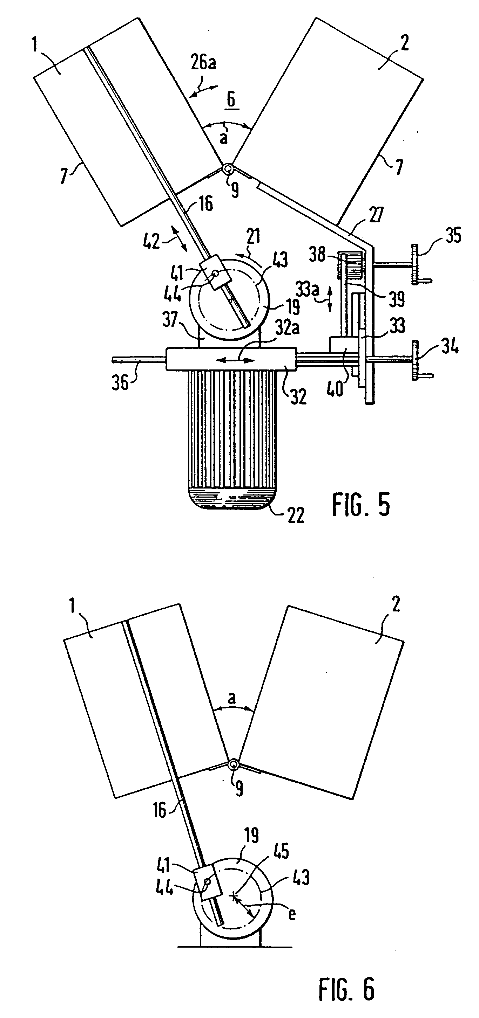

Das soeben aufgezeigte Konzept ist im Ausführungsbeispiel nach Fig. 3 verwirklicht: Der Befestigungsrahmen 7 des zweiten Förderbandes 2 ist mit seiner Unterseite an einem Winkeleisen 27 ortsfest angebracht, das zum (nicht weiter gezeichneten) Chassis der Wirkvorrichtung gehört. Folglich läßt sich nur noch das gegenüberliegende Förderband 1 - der zweite Schenkel des V-förmigen Wirkkanals 6 - in Schwenkbewegungen 26a vesetzen. Ein weiterer Unterschied des Ausführungsbeispiels nach Fig. 3 gegenüber dem nach Fig. 1 und 2 besteht darin, daß die Ansätze 8 weggelassen sind; stattdessen sind die einander gegenüberliegenden Eckpunkte 28 der beiden Befestigungsrahmen 7 direkt über die Scharnierachse 9 miteinander verbunden. Daraus ergibt sich eine Versetzung des V-Scheitels des Wirkkanals 6 bzw. der Scharnierachse 9 nach oben zum offenen Wirkkanalende hin (vgl. auch Fig. 4). Zudem ist nach Fig. 3 - anstelle der festschraubbaren Flachscheibe 18 - eine Spindel 29 im Langloch 14 angeordnet; diese läßt sich mittels einer Kurbel 30 manuell drehen. Durch die Drehung wird eine den Anlenkpunkt 15 der Stellstange 16 tragende Büchse 31, die das Außengewinde der Spindel 29 umgibt und darauf kämmt, in Schieberichtung 17 hin- und herbewegt.

In Fig. 4 ist der Unterschied der Wirkungsweise des ersten Ausführungsbeispiels nach Fig. 1 und 2 gegenüber dem zweiten Ausführungsbeispiel nach Fig. 3 verdeutlicht: Die Lage der Scharnierachse des Wirkkanals 6 gemäß erstem Ausführungsbeispiel ist mit I und diejenige gemäß zweitem Ausführungsbeispiel mit II bezeichnet. Werden die beiden Förderbänder bzw. V-Schenkel 1, 2 gegeneinander verschwenkt, wird ein beliebiger Punkt P_{I/II} auf der Wirkfläche eines der Förderbänder 1, 2 unter anderem um das Maß X_{I} oder X_{II} nach oben versetzt; das kleinere Maß X_{I} wird mit dem ersten Ausführungsbeispiel (Figuren 1 und 2), das zweite Maß X_{II} mit dem zweiten Ausführungsbeispiel (Fig. 3) realisiert. Mit dem zweiten Ausführungsbeispiel wird also für einen beliebigen Punkt auf der Wirkfläche eines der Förderbänder ein größerer vertikaler Hub nach oben als beim ersten Ausführungsbeispiel erreicht. Der horizontale Hub Y_{I/II} dagegen bleibt bei beiden Ausführungsbeispielen gleich. Die periodischen Hübe X_{I} und X_{II} einerseits und Y_{I/II} andererseits erzeugen Kräfte auf den Teig 32, die sein vollständiges Kneten oder "Durchwalken" gewährleisten. Eine weitere Krafteinwirkung auf den Teig 32 ergibt sich aus den unterschiedlichen Geschwindigkeiten bzw. der Differenzgeschwindigkeit zwischen den beiden V-Schenkel-Bändern 1, 2.

Auch beim dritten Ausführungsbeispiel gemäß Fig. 5 und 6 ist das zweite Förderband bzw. V-Schenkel 2 an einem zum Vorrichtungschassis gehörenden Winkeleisen 27 ortsfest fixiert. Im Unterschied zum obigen zweiten Ausführungsbeispiel (Fig. 3) ist jedoch das Stellorgan 16, 19, 22 unterhalb der Scharnierachse 9 des Wirkkanals 6 angeordnet und in horizontalen und vertikalen Linear-Führungsschlitten 32, 33 in jeweilige horizontale und vertikale Schiebebewegungen 32a, 33a hin- und herverstellbar gelagert. Der Verstellung dienen jeweilige Handkurbeln 34, 35. Mittels der ersten Handkurbel 34 wird eine Spindel 36 in eine Drehung versetzt, welche über das Spindelaußengewinde und den damit kämmenden und in den Horizontalschlitten 32 gebetteten Stellorganträger 37 in die horzintale Verschiebebewegung 32a umgesetzt wird. Mittels der zweiten Handkurbel 35 wird über ein Getriebeelement 38 und eine damit kämmende Zahnstange 39 dem Stellorgan 16, 19, 22 die vertikale Verschiebebewegung 33a erteilt, weil die so linear bewegte Zahnstange über das im Vertikalschlitten 33 gebettete Schiebeelement 40 mit dem Stellorgan 16, 19, 22 ortsfest verbunden ist. Auf der zum Stellorgan gehörenden Scheibe 19, in Rotation 21 versetzbar durch den Antriebsmotor 22, ist eine Kugelbüchse 41 exzentrisch angelenkt und auf der Stellstange 16 in deren Längsrichtung 42 hin- und herlaufbar gelagert. Das der Scheibe 19 entgegengesetzte Ende der Stellstange 16 ist mit dem ersten Förderband 1 bzw. dessen Befestigungsrahmen 7 winkelfest und unverdrehbar verbunden. Wird die Scheibe 19 aus der in Fig. 5 gezeigten Stellung in Rotation 21 entgegen dem Uhrzeigersinn versetzt, resultiert die in Fig. 6 gezeigte Stellung, wonach die Kugelbüchse 41 längs der strichpunktiert gezeichneten, exzentrischen Kreisbahn 43 gegenüber der Scharnierachse 9 nach außen versetzt und so der Winkel a zwischen den beiden V-Schenkeln 1, 2 verkleinert ist. Bei weiterer Bewegung der Kugelbüchse 41 entlang der Kreisbahn 43 wird ein periodisches Vergrößern und Verkleinern des Winkels a herbeigeführt, wobei die Größe der Exzentrizität e das Ausmaß des Winkelhubs beeinflußt.

## Patentansprüche

1. Verfahren zum Rundwirken von Teig in einem querschnittlich etwa V-förmigen Wirkkanal (6), der von scharniergelenkig verbundenen Wirk- und/oder Förderbändern (1, 2) gebildet ist, deren gemeinsamer V-Winkel (a) verstellt werden kann, dadurch gekennzeichnet, daß zur Änderung des V-Winkels (a) während des Wirkbetriebs die Förderbänder zueinander und voneinander dynamisch mittels eines motorisierten Stellorgans (16, 19, 22) verschwenkt werden.

2. Verfahren nach Anspruch 1, dadurch gekennzeichnet, daß die Änderung des V-Winkels (a) periodisch und/oder symmetrisch ausgeführt wird.

3. Verfahren nach Anspruch 1 oder 2, dadurch gekennzeichnet, daß der Teig mittels einem oder mehreren Führungselementen (24) vom Öffnungsbereich des Wirkkanals (6) aus nach innen gehalten und/o der in Richtung zu dessen V-Scheitel oder Scharnierachse (9) gedrückt wird.

4. Vorrichtung zum Rundwirken von Teig, insbesondere zur Ausführung des Verfahrens nach einem der Ansprüche 1-3, mit mehreren Wirk- und/oder Förderbändern (1, 2), die gemeinsam einen querschnittlich etwa V-förmigen Wirkkanal (6) bilden und im Bereich der Scheitellinie des Wirkkanals (6) scharniergelenkig (9) verbunden und mittels eines Stellorgans (16, 19, 22) gegeneinander verschwenkbar sind, dadurch gekennzeichnet, daß das Stellorgan (16, 19, 22) einen Stößel oder eine Stange (16) aufweist, der oder die einerseits an dem einen querschnittlichen V-Schenkel des Wirkkanals (6) angelenkt, und andererseits mit einer ihm oder ihr Hubbewegungen (25) erteilenden, motorisierten Antriebseinheit (19, 22) gekoppelt ist, die am oder gegenüber dem anderen V-Schenkel (2) und/oder Vorrichtungschassis (27) ortsfest fixiert ist.

5. Vorrichtung nach Anspruch 4, dadurch gekennzeichnet, daß der Wirkkanal (6) im Bereich seinen freien Ränder mit Teig-Führungselementen (24) versehen ist.

6. Vorrichtung nach Anspruch 4 oder 5, dadurch gekennzeichnet, daß das Stellorgan (16, 19, 22) an den freien Enden der querschnittlichen V-Schenkel (1, 2) des Wirkkanals (6) angreift.

7. Vorrichtung nach Anspruch 4, 5 oder 6, dadurch gekennzeichnet, daß eines der Wirk- und/oder Förderbänder (1, 2) und/oder die Scharnierachse (9) am Vorrichtungschassis (27) ortsfest fixiert sind.

8. Vorrichtung nach Anspruch 7 ohne Anspruch 6, dadurch gekennzeichnet, daß das Stellorgan (16, 19, 22) an einem der querschnittlichen V-Schenkel (1) des Wirkkanals (6) angreift und an dem Vorrichtungschassis (27), an dem der zweite V-Schenkel (2) fixiert ist, gegebenfalls gelenkig (44) angebracht ist.

9. Vorrichtung nach Anspruch 8 dadurch gekennzeichnet, daß das Stellorgan (16, 19, 22) unterhalb des Wirkkanals (6) angeordnet ist.

10. Vorrichtung nach Anspruch 4 und einem der nachfolgenden Ansprüche, dadurch gekennzeichnet, daß die Antriebseinheit (19, 22) eine rotierbare Scheibe (19) aufweist, an welche die Stange (16) exzentrisch angelenkt (44) und/oder in ihrer Längsrichtung (42) hin- und herlaufbar gelagert (41) ist.

11. Vorrichtung nach Anspruch 10, dadurch gekennzeichnet, daß die Versetzung beziehungsweise Exzentrizität (e) des Anlenkpunktes (44) auf der Scheibe (19) gegenüber dessen Zentrum (45) einstellbar ausgeführt ist.

12. Vorrichtung nach einem der Ansprüche 4 - 11, gekennzeichnet durch eine für das Stellorgan (16, 19, 22) und das Förderband (2) gemeinsame Antriebseinheit.

13. Vorrichtung nach einem der Ansprüche 4 - 12, dadurch gekennzeichnet, daß das Vorrichtungschassis (27) eine oder mehrere, vorzugsweise zueinander senkrechte Linearführungen (32, 33) aufweist, in welchen das Stellorgan (16, 19, 22) verschiebbar (32a, 33a) gelagert ist.

14. Vorrichtung nach Anspruch 5 und einem der nachfolgenden Ansprüche, gekennzeichnet durch Befestigungsbleche und/oder -rahmen (7, 12, 13), vorzugsweise nach außen gekröpft, am und/oder um den Wirkkanal (6) für die Teig-Führungselemente (24), das Stellorgan (16, 19, 22) oder gegebenenfalls die zugehörige Stange (16) und Antriebseinheit (19, 22).

15. Vorrichtung nach Anspruch 5 und einem der nachfolgenden Ansprüche, dadurch gekennzeichnet, daß die Anlenkung der Stell- bzw. Hubstange (16) am querschnittlichen V-Schenkel (1) in einem Langloch (14) verschieb- und festlegbar (17, 18,29, 30, 31) erfolgt.

16. Vorrichtung nach einem der Ansprüche 4 - 15, gekennzeichnet durch einen im Wirkkanal (6) auf oder über der Scharnierachse (9) liegenden Strang (10), zum Beispiel aus Rundstahl.

17. Vorrichtung nach Anspruch 5 und einem der nachfolgenden Ansprüche, dadurch gekennzeichnet, daß das Führungselement als Knet- bzw. Wirkelement (24) beispielsweise aus Holz ausgeführt ist und - die obere Öffnung des querschnittlichen V-Profils des Wirkkanals (6) verengend - vorspringt.

18. Vorrichtung nach Anspruch 17, gekennzeichnet durch einen oder mehrere zum V-Scheitel oder zur Scharnierachse (9) des Wirkkanals (6) gerichtete Linearschlitten, in welchen die Führungselemente (24) verschiebbar gelagert sind.

19. Vorrichtung nach einem der Ansprüche 4 - 18, dadurch gekennzeichnet, daß die Wirk- und/oder Förderbänder (1, 2) mittelbar über verlängernde Ansätze (8) aneinander gelenkt (9) sind.

## Claims

1. Method of kneading dough into a roll in a trough (6) of approximately V-shaped cross-section formed by kneading and/or conveyor belts (1, 2) connected together by hinge joints, the common angle (a) of the belts forming the vee being adjustable, characterised in that in order to vary the angle (a) of the vee during operation, the conveyor belts are pivoted dynamically towards and away from one another by means of a motorised actuator (16, 19, 22).

2. Method according to claim 1, characterised in that the angle (a) of the vee is varied periodically and/or symmetrically.

3. Method according to claim 1 or 2, characterised in that the dough is held towards the inside by means of one or more guide elements (24) from the open region of the trough (6) and or is pushed in the direction of the vee apex or hinge axis (9).

4. Apparatus for shaping dough into a roll, in particular for carrying out the method according to one of claims 1-3, having a plurality of kneading and/or conveyor belts (1, 2) which together form a kneading trough (6) of approximately V-shaped cross-section and which are connected together by hinge joints (9) at the apex line of the kneading trough (6) and are adjustable relative to one another by means of an actuator (16, 19, 22), characterised in that the actuator (16, 19, 22) has a ram or rod (16) which is coupled on the one hand to the one arm of the vee cross-section of the kneading trough (6) and on the other hand to a motorised drive unit (19, 22), which imparts reciprocating motion to said ram or rod and is fixed permanently to or relative to the other arm (2) of the vee and/or to the machine chassis (27).

5. Apparatus according to claim 4, characterised in that the kneading trough (6) is provided in the region of its free edges with dough-guiding elements (24).

6. Apparatus according to claim 4 or 5, characterised in that the actuator (16, 19, 22) acts on the free ends of the arm (1, 2) of the vee cross-section of the kneading trough (6).

7. Apparatus according to claim 4, 5 or 6, characterised in that one of the kneading and/or conveyor belts (1, 2) and/or the hinge axis (9) are fixed permanently to the machine chassis (27).

8. Apparatus according to claim 7 without claim 6, characterised in that the actuator (16, 19, 22) acts on one of the cross-sectional vee arms (1) of the kneading channel (6) and is optionally pivotably (44) mounted on the machine chassis (27) to which the second vee arm (2) is fixed.

9. Apparatus according to claim 8, characterised in that the actuator (16, 19, 22) is disposed below the kneading trough (6).

10. Apparatus according to claim 4 and one of the subsequent claims, characterised in that the drive unit (19, 22) has a rotary disc (19) to which the rod (16) is eccentrically coupled (44) and/or on which said rod is mounted (41) so as to reciprocate in its longitudinal direction (42).

11. Apparatus according to claim 10, characterised in that the offset or eccentricity of the coupling point (44) on the disc is adjustable relative to its centre (45).

12. Apparatus according to one of claims 4-11, characterised by a common drive unit for the actuator (16, 19, 22) and the conveyor belt (2).

13. Apparatus according to one of claims 4-12, characterised in that the machine chassis (27) has one or more linear guides (32, 33), preferably perpendicular to one another, in which the actuator (16, 19, 22) is displaceably mounted (32a, 33a).

14. Apparatus according to claim 5 and one of the subsequent claims, characterised by fixing plates and/or frames (7, 12, 13), preferably bent outwards, on and/or about the kneading trough (6) for the dough-guiding elements (24), the actuator (16, 19, 22) or optionally the associated rod (16) and drive unit (19, 22).

15. Apparatus according to claim 5 and one of the subsequent claims, characterised in that the coupling of the actuating or lifting rod (16) to the arm (1) of the vee cross-section is effected so as to be displaceable and fixable (17, 18, 29, 30, 31) in a slot (14).

16. Apparatus according to one of claims 4-15, characterised by a strand (10), e.g. of round steel, disposed in the kneading trough (6) on or above the hinge axis (9).

17. Apparatus according to claim 5 and one of the subsequent claims, characterised in that the guide element is formed as a kneading element (24), e.g. made of wood, and projects so as to narrow the upper aperture of the cross-sectional vee profile of the kneading trough (6).

18. Apparatus according to claim 17, characterised by one or more linear slides oriented towards the vee apex or towards the hinge axis (9) of the kneading trough (6), in which slides the guide elements (24) are slidably guided.

19. Apparatus according to one of claims 4-18, characterised in that the kneading and/or conveyor belts (1,2) are directly coupled together (9) via lugs (8).

## Revendications

1. Procédé pour façonner en rond de la pâte, dans un canal de façonnage (6) sensiblement en forme de "V" en section transversale, qui est formé par des bandes de façonnage et/ou de transport (1, 2) reliées par une articulation à charnière, dont l'angle (a) de "V" qu'elles délimitent conjointement, peut être réglé, caractérisé en ce que pour modifier l'angle (a) du "V" pendant l'opération de façonnage, les bandes de transport sont déplacées par pivotement, de manière dynamique, l'une vers l'autre et l'une à l'opposé de l'autre, au moyen d'un ensemble de positionnement motorisé (16, 19, 22).

2. Procédé selon la revendication 1, caractérisé en ce que la modification de l'angle (a) du "V" est effectuée de manière périodique et/ou symétrique.

3. Procédé selon la revendication 1 ou 2, caractérisé en ce que la pâte est maintenue vers l'intérieur, depuis la région de l'ouverture du canal de façonnage (6), et/ou est repoussée en direction du sommet du "V" ou de l'axe de charnière (9) de ce canal, au moyen d'un ou de plusieurs éléments de guidage (24).

4. Dispositif pour façonner en rond de la pâte, notamment pour la mise en oeuvre du procédé selon l'une des revendications 1 à 3, comportant plusieurs bandes de façonnage et/ou de transport (1, 2), qui forment conjointement un canal de façonnage (6) sensiblement en forme de "V" en section transversale, et qui sont reliées par une articulation à charnière (9), dans la région de la ligne du sommet du canal de façonnage (6), et peuvent être déplacées par pivotement l'une par rapport à l'autre au moyen d'un ensemble de positionnement (16, 19, 22), caractérisé en ce que l'ensemble de positionnement (16, 19, 22) comporte un poussoir ou une tige (16), qui, d'un côté, est articulé à l'une des branches du "V" de la section transversale du canal de façonnage (6) et, de l'autre côté, est accouplé à une unité d'entraînement motorisée (19, 22) lui communiquant des mouvements de déplacement, cette unité d'entraînement étant fixée en position fixe sur ou par rapport à l'autre branche (2) du "V" et/ou sur ou par rapport au châssis (27) du dispositif.

5. Dispositif selon la revendication 4, caractérisé en ce que le canal de façonnage (6) est pourvu, dans la région de ses bords libres, d'éléments de guidage (24) de la pâte.

6. Dispositif selon la revendication 4 ou 5, caractérisé en ce que l'ensemble de positionnement (16, 19, 22) agit sur les extrémités libres des branches (1,2) du "V" de la section transversale du canal de façonnage (6).

7. Dispositif selon la revendication 4, 5 ou 6, caractérisé en ce que l'une des bandes de façonnage et/ou de transport (1, 2) et/ou l'axe de charnière (9) sont fixés en position fixe au châssis (27) du dispositif.

8. Dispositif selon la revendication 7, sans la revendication 6, caractérisé en ce que l'ensemble de positionnement (16, 19, 22) agit sur l'une des branches (1) du "V" de la section transversale du canal de façonnage (6), et est monté, le cas échéant par une articulation (44), sur le châssis (27) du dispositif, sur lequel est fixée la seconde branche (2) du "V".

9. Dispositif selon la revendication 8, caractérisé en ce que l'ensemble de positionnement (16, 19, 22) est disposé sous le canal de façonnage (6).

10. Dispositif selon la revendication 4 et l'une des revendications suivantes, caractérisé en ce que l'unité d'entraînement (19, 22) présente un disque rotatif (19), auquel la tige (16) est articulée (44) de manière excentrée et/ou sur lequel la tige (16) est montée (41) de manière à pouvoir être déplacée selon un mouvement de va-et-vient dans sa direction longitudinale (42).

11. Dispositif selon la revendication 10, caractérisé en ce que le départ ou l'excentricité (e) du point d'articulation (44) sur le disque (19) est prévu de manière réglable par rapport au centre (45) de ce dernier.

12. Dispositif selon l'une des revendications 4 à 11, caractérisé par une unité d'entraînement commune pour l'ensemble de positionnement (16, 19, 22) et la bande de transport (2).

13. Dispositif selon l'une des revendications 4 à 12, caractérisé en ce que le châssis (27) du dispositif présente un ou plusieurs guidages linéaires (32, 33), de préférence perpendiculaires l'un par rapport à l'autre, dans lesquels l'ensemble de positionnement (16, 19, 22) est monté de manière coulissante (32a, 33a).

14. Dispositif selon la revendication 5 et l'une des revendications suivantes, caractérisé par des tôles et/ou des cadres de fixation (7, 12, 13), de préférence coudés vers l'extérieur, sur et/ou autour du canal de façonnage (6), pour les éléments de guidage (24) de la pâte, l'ensemble de positionnement (16, 19, 22) ou, le cas échéant, la tige (16) et l'unité d'entraînement (19, 22), qui en font partie.

15. Dispositif selon la revendication 5 et l'une des revendications suivantes, caractérisé en ce que l'articulation de la tige de positionnement ou, suivant le cas, de déplacement (16) sur la branche (1) du "V" de la section transversale, s'effectue dans un trou oblong (14), avec possibilité de coulissement et d'immobilisation (17, 18, 29, 30, 31).

16. Dispositif selon l'une des revendications 4 à 15, caractérisé par une barre (10), par exemple un fer rond, située dans le canal de façonnage (6), sur ou au-dessus de l'axe de charnière (9).

17. Dispositif selon la revendication 5 et l'une des revendications suivantes, caractérisé en ce que l'élément de guidage, est réalisé en tant qu'élément de pétrissage et de façonnage (24), par exemple en bois, et fait saillie en rétrécissant l'ouverture supérieure du profil en "V" de la section transversale du canal de façonnage (6).

18. Dispositif selon la revendication 17, caractérisé par un ou plusieurs chariots linéaires dirigés vers le sommet du "V" ou l'axe de charnière (9) du canal de façonnage (6), dans lesquels sont montés, déplaçables à coulissement, les éléments de guidage (24).

19. Dispositif selon l'une des revendications 4 à 18, caractérisé en ce que les bandes de façonnage et/ou de transport (1, 2) sont articulées (9) l'une à l'autre de manière indirecte, par l'intermédiaire d'embases (8) qui les prolongent.
